# EUROPEAN PATENT SPECIFICATION

(11) **EP 4 276 986 B1**
(45) Date of publication and mention of the grant of the patent: **17.12.2025**
(21) Application number: 22788324.6
(22) Date of filing: 05.04.2022
(51) Int. Cl.: H01M 50/105, H01M 50/178, B29C 43/36, B29C 51/08, B29L 31/00

(54) **POUCH-TYPE BATTERY CASE, APPARATUS FOR MANUFACTURING THE SAME, AND POUCH-TYPE SECONDARY BATTERY**
BEUTELARTIGES BATTERIEGEHÄUSE, HERSTELLUNGSVORRICHTUNG DAFÜR UND BEUTELARTIGE SEKUNDÄRBATTERIE
COMPARTIMENT DE BATTERIE DE TYPE POCHE, SON DISPOSITIF DE FABRICATION, ET BATTERIE SECONDAIRE DE TYPE POCHE

(30) Priority: 14.04.2021 KR 20210048279
(43) Date of publication of application: 15.11.2023
(73) Proprietor: LG Energy Solution, Ltd., Seoul 07335 (KR)
(72) Inventor: KIM, Hyun Beom, Daejeon 34122 (KR); MIN, Min Kyu, Daejeon 34122 (KR); CHOI, Kyu Hyun, Daejeon 34122 (KR); KIM, Gi Man, Daejeon 34122 (KR); KIM, Dae Hong, Daejeon 34122 (KR); OH, Se Young, Daejeon 34122 (KR)
(74) Representative: Plasseraud IP
(86) International application number: PCT/KR2022/004882
(87) International publication number: WO 2022/220468

(56) References cited:
- KR-A- 20170 058 021
- KR-A- 20190 105 765
- KR-A- 20190 105 765
- KR-A- 20190 106 473
- KR-A- 20190 106 473
- KR-A- 20200 106 381
- KR-A- 20210 032 916

## Description

### TECHNICAL FIELD

### CROSS-REFERENCE TO RELATED APPLICATION

The present application claims the benefit of the priority of Korean Patent Application No. 10-2021-0048279, filed on April 14, 2021.

### TECHNICAL FIELD

The present invention relates to a pouch-type battery case, an apparatus for manufacturing the same, and a pouch-type secondary battery.

### BACKGROUND ART

KR 2019 0105765 relates to an apparatus for manufacturing a pouch.
Secondary batteries that are repetitively chargeable and dischargeable may be divided into cylindrical type secondary batteries, prismatic type secondary batteries, and pouch-type secondary batteries according to their manufacturing methods or structures. Among them, in general, such a pouch-type secondary battery has a structure in which an electrode assembly having a structure, in which electrodes and separators are alternately disposed in a sheet-shaped pouch exterior, is accommodated.

According to the related art, in order to manufacture the pouch-type secondary battery, a pouch-type battery case is manufactured through a forming process, in which a partial area of a pouch sheet is pressed by an area corresponding to an area of the electrode assembly to a recess part having a recessed shape. Thereafter, the electrode assembly is mounted in the recess part, and portions of the battery case are attached to each other to form a sealing part.

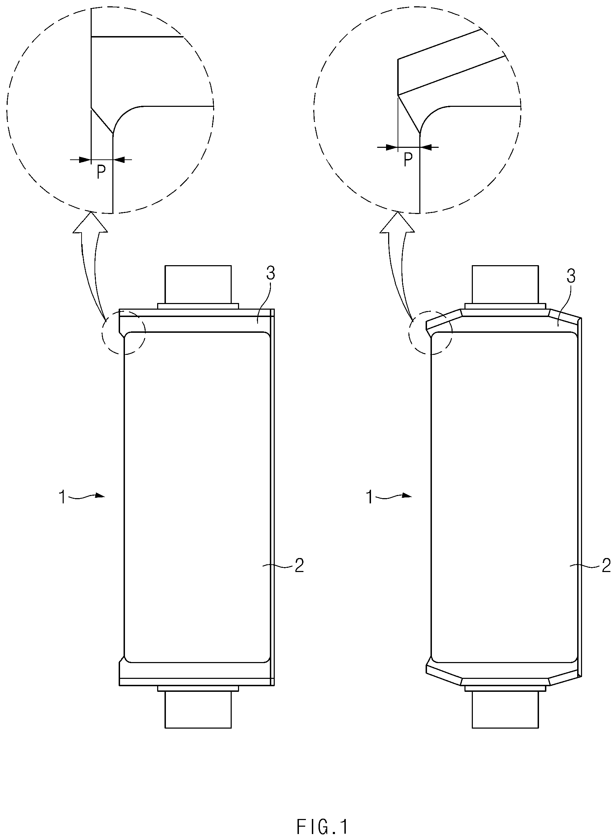

The sealing part formed by attaching the portions of the partial areas of the pouch-type battery case to each other is formed by attaching areas that are not pressed in the forming process. Thus, due to a height difference between the sealing part, on which the forming process is not performed, and an accommodation part, on which the forming process is performed, a portion of the sealing area is deviated from a width of the accommodation part. FIG. 1 illustrates a state in which a partial area of the sealing part 3 formed at each of both sides in a longitudinal direction of the pouch-type secondary battery 1 manufactured according to the related art protrudes more than the width of the recess part 2 in which the electrode assembly is accommodated.

The protruding area as described above is generally referred to as a bat-ear. The bat-ear may act as a cause of an increase in dead space that is not contributed in capacity, resulting in causing a problem that energy densities of a battery cell and a secondary module are reduced.

In addition, according to the related art, since a void space is generated between an inner circumference of the recess part 2 and the electrode assembly, wrinkles occur in the battery case 2 after a degassing process.

### DISCLOSURE OF THE INVENTION

### TECHNICAL PROBLEM

Accordingly, an object of the present invention for solving the above problem is to provide a pouch-type battery case in which a void space that is not occupied by an electrode assembly is reduced, and a pouch-type secondary battery including the same.

Another object of the present invention for solving the above problem is to provide a manufacturing apparatus capable of manufacturing the pouch-type battery case.

### TECHNICAL SOLUTION

A pouch-type battery case according to the invention is defined in claim 1.

In the state in which the battery case is unfolded, the bottom surfaces of the pair of recess parts may be formed to be inclined upward in a direction away from each other.

In the state in which the battery case is unfolded, the angle formed by the pair of terraces may be 130 degrees to 170 degrees.

The pouch-type battery case may further include: an inner edge configured to connect an inner circumference of the recess part to the bottom surface of the recess part; and an outer edge configured to connect an outer circumference of each of the recess part to the terrace. The inner edge may have a curvature radius equal to or greater than a curvature radius of the outer edge.

In the state in which the battery case is unfolded, a clearance between the inner edge and the outer edge in a horizontal direction may be 0.5 mm or less.

In the state in which the battery case is unfolded, a clearance between the inner edge and the outer edge in a horizontal direction may be 0.35 mm or less.

In the state in which the battery case is unfolded, a clearance between the inner edge and the outer edge in a horizontal direction may be equal to or less than the curvature radius of the outer edge.

The pouch-type battery case may further include, in the state in which the battery case is unfolded, a bending part configured to connect the pair of terraces to each other and convexly rounded downward.

The bridge may further include a first connection edge configured to connect the pair of connection surfaces to each other and convexly rounded upward. A height of the lowermost end of the bending part may be equal to or greater than a height of the uppermost end of the first connection edge.

In the state in which the battery case is unfolded, the bridge may further include a pair of second connection edges configured to connect the pair of connection surfaces to the bottom surfaces of the pair of recess parts and convexly rounded downward.

In the state in which the battery case is unfolded, with respect to a virtual line passing through a boundary between the inner circumference of the recess part and the inner edge and perpendicular to each of the terraces, a distance from the virtual line to the connection surface in a direction parallel to the terrace may be a first distance, and a distance from the virtual line to a boundary between the terrace and the bending part may be a second distance less than the first distance.

In the state in which the battery case is unfolded, a length from a center of the bending part to the boundary between the terrace and the bending part may be less than a difference between the first distance and the second distance.

A pouch-type secondary battery may include: an electrode assembly in which electrodes and separators are alternately stacked; and the pouch-type battery case including an accommodation part configured to accommodate the electrode assembly. The case may include: a folding part configured to form a portion of a circumferential surface of the accommodation part; and a circumferential part expanded from the other portion of the circumferential surface of the accommodation part. An edge of the circumferential part may include: a first edge adjacent to the folding part; a second edge extending from the first edge in an opposite direction of the folding part and having a thickness less than that of the first edge; and a boundary part configured to connect the first edge to the folding part and protruding more than the first edge in a width direction of the accommodation part.

The first edge and the second edge may protrude less than the folding part in the width direction of the accommodation part.

The second edge may protrude more than the first edge in the width direction of the accommodation part.

The boundary part may protrude less than the folding part in the width direction of the accommodation part.

The pouch-type secondary battery may further include: an inner edge configured to connect an inner top surface or inner bottom surface of the accommodation part to an inner circumference of the accommodation part; and an outer edge configured to connect an outer circumference of the accommodation part to the circumferential part. The inner edge may have a curvature radius equal to or greater than a curvature radius of the outer edge.

A clearance between the inner edge and the outer edge in a horizontal direction may be equal to or less than the curvature radius of the outer edge.

An apparatus for manufacturing a pouch-type battery case may be formed by punching a pouch sheet seated on a die by using a punch. The die may include: a pair of seating surfaces inclined upward in a direction away from each other; a pair of forming parts recessed or penetrated downward from the pair of seating surfaces; and a center part disposed between the pair of forming parts. The punch may include a pair of punching parts inserted into the pair of forming parts and having bottom surfaces inclined in a direction, in which a height thereof decreases as the pair of punching parts are closer to each other. An angle formed by the pair of seating surfaces may be an obtuse angle.

The angle formed by the pair of seating surfaces may be 130 degrees to 170 degrees.

The die may further include a die edge configured to connect an inner circumference of each of the forming parts to each of the seating surfaces. The punch may further include a punching edge configured to connect an outer circumference of the punching part to a bottom surface of the punching part. The punching edge may have a curvature radius equal to or greater than a curvature radius of the die edge.

A clearance between the die edge and the punching edge in a horizontal direction may be 0.5 mm or less.

A clearance between the die edge and the punching edge in a horizontal direction may be equal to or less than the curvature radius of the outer edge.

The center part may include a pair of inclined surfaces formed to be inclined downward in a direction away from each other.

The center part may further include a center edge configured to connect the pair of inclined surfaces to each other and rounded upward.

The punching part may further include a side edge formed on a lower end of the bottom surface and convexly rounded downward.

### ADVANTAGEOUS EFFECTS

According to the preferred embodiment of the present invention, it may be possible to minimize the void space that is not occupied by the electrode assembly while removing the bat-ear of the pouch-type secondary battery. Therefore, it may be possible to increase in energy density of the secondary battery.

### BRIEF DESCRIPTION OF THE DRAWINGS

FIG. 1 is a view illustrating an outer appearance of a pouch-type secondary battery according to a related art.
FIG. 2 is a perspective view illustrating a state in which an electrode assembly is accommodated in the pouch-type battery case according to an embodiment of the present invention.
FIG. 3 is a plan view illustrating a state in which the pouch-type battery case is unfolded according to an embodiment of the present invention.
FIG. 4 is a vertical cross-sectional view illustrating the state in which the pouch-type battery case is unfolded according to an embodiment of the present invention.
FIG. 5 is an enlarged view illustrating a bridge and a periphery of the bridge, which are illustrated in FIG. 4.
FIG. 6 is a view for explaining a detailed configuration of the pouch-type battery case illustrated in FIG. 4.
FIG. 7 is a cross-sectional view illustrating an apparatus for manufacturing the pouch-type battery case according to an embodiment of the present invention.
FIGS. 8a and 8b are first experimental examples according to an embodiment of the present invention.
FIGS. 9a and 9b are second experimental examples according to an embodiment of the present invention.
FIGS. 10a and 10b are first comparative examples.
FIGS. 11a and 11b are second comparative examples.
FIGS. 12a and 12b are third comparative examples.
FIG. 13 is a plan view illustrating a pouch-type secondary battery according to an embodiment of the present invention.
FIG. 14 is an enlarged plan view illustrating an edge of a circumferential part and a periphery of the circumferential part, which are illustrated in FIG. 13.
FIG. 15 is a perspective view illustrating the edge of the circumferential part and the periphery of the circumferential part, which are illustrated in FIG. 13.
FIG. 16 is a view illustrating a state in which a pouch-type battery case is unfolded according to another embodiment of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

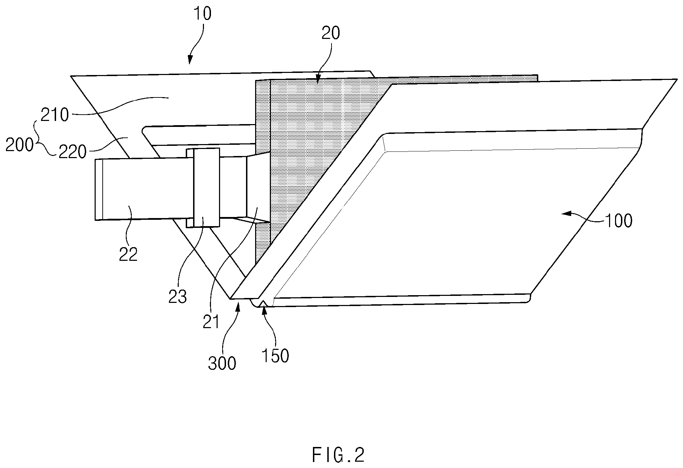

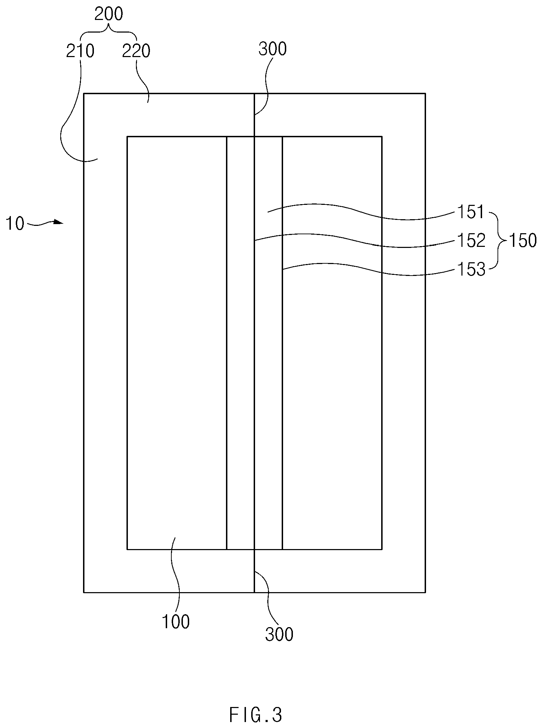

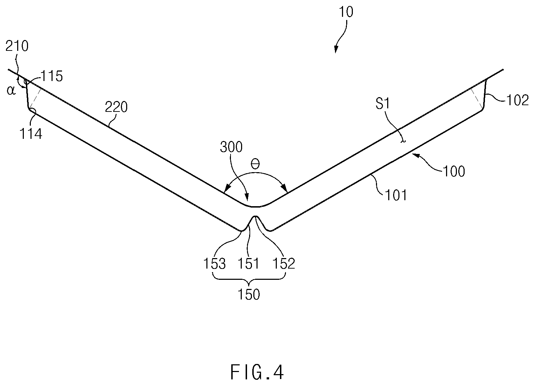

FIG. 2 is a perspective view illustrating a state in which an electrode assembly is accommodated in the pouch-type battery case according to an embodiment of the present invention, FIG. 3 is a plan view illustrating a state in which the pouch-type battery case is unfolded according to an embodiment of the present invention, and FIG. 4 is a vertical cross-sectional view illustrating the state in which the pouch-type battery case is unfolded according to an embodiment of the present invention.

A pouch-type secondary battery (hereinafter, referred to as a 'secondary battery') according to the present invention may include a pouch-type battery case 10 (hereinafter, referred to as a 'case') and an electrode assembly 20.

The electrode assembly 20 may be formed by alternately stacking electrodes and separators.

The electrode assembly 20 may be provided with an electrode tab 21. The electrode tabs 21 are respectively connected to a positive electrode and a negative electrode of the electrode assembly 20 to protrude outward from the electrode assembly 20, thereby providing a path, through which electrons are moved, between the inside and outside of the electrode assembly 20.

The plurality of electrode tabs 21 connected to the positive electrode and the plurality of electrode tabs 21 connected to the negative electrode may protrude in different directions with respect to the electrode assembly 20. However, the present invention is not limited thereto, and the plurality of electrode tabs 21 connected to the positive electrode and the plurality of electrode tabs 21 connected to the negative electrode may protrude in parallel in the same direction with respect to the electrode assembly 20.

An electrode leads 22 supplying electricity to the outside of the secondary battery may be connected to the plurality of electrode tabs 21 by spot welding or the like. One end of the electrode lead 22 may be connected to the plurality of electrode tabs 21, and the other end of the electrode lead 22 may protrude to the outside of the case 10.

A portion of the electrode lead 22 may be surrounded by an insulating part 23. For example, the insulating part 23 may include an insulating tape. The insulating part 23 may be disposed between a pair of terraces 200 of the case 10 to be described later, and in this state, the pair of terraces 200 may be thermally fused to each other. In this case, a portion of the pair of terraces 200 may be thermally fused to the insulating part 23. Thus, the insulating part 23 may prevent the electricity generated from the electrode assembly 20 from flowing to the battery case 10 through the electrode lead 22 and may maintain sealing of the battery case 10.

The, the case 10 may accommodate the electrode assembly 20.

In the present specification, the 'state in which the case 10 is unfolded' refers to a state of the case 10 which is unfolded by releasing predetermined adhesion or sealing existing in the case 10 and then is left as it is without applying artificial force to the case 10. Alternatively, the state may be referred to a state just before slowly unfolding the case 10 after releasing the predetermined adhesion or sealing existing in the case 10, i.e., a state just before deforming the terrace 200 to be described later due to the unfolding operation.

That is, the 'state in which the case 10 is unfolded' may mean a state before the case 10 is manufactured by a forming process and then folded.

Hereinafter, the configuration of the case 10 will be described in detail based on the unfolded state of the case 10.

The case 10 includes a pair of recess parts 100, each of which has a recessed shape, a pair of terraces 200 disposed around the pair of recess parts 100, and a bridge 150 disposed between the pair of recess parts 100.

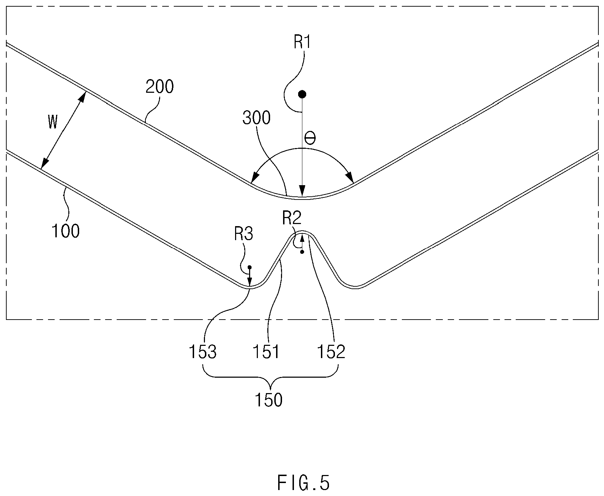

Each of the recess parts 100 may be an approximately cup shape. In more detail, each of the recess parts 100 may be recessed by a predetermined depth W (see FIG. 5) from the terrace 200 to be described later to form a recessed space S1.

A portion adjacent to a side 210 of the terrace 200 to be described later in the recessed space S1 defined by the pair of recess parts 100 may form a void space that is not occupied by the electrode assembly 20 when the case 10 is sealed.

Preferably, recessed depths of the pair of recess parts 100 may be equal to each other. In this case, the pair of recess parts 100 may have a symmetrical shape.

However, the present invention is not limited thereto, and it is also possible that the recessed depths of the pair of recess parts 100 are different from each other. In this case, the pair of recess parts 100 may have an asymmetric shape.

Bottom surfaces 101 of the pair of recess parts 100 may be formed to be inclined downward in a direction toward each other. The bottom surfaces 101 of the pair of recess parts 100 may be connected to each other by the bridge 150 to be described later.

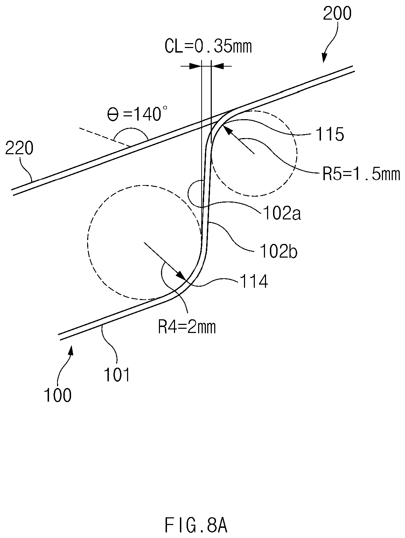

The bottom surface 101 and an inner circumference 102a (see FIG. 8A) of each of the recess parts 100 may be connected to each other through an inner edge 114, and an outer circumference of the recess part 100 and the terrace 200 to be described later may be connected to each other through an outer edge 115. Each of the inner edge 114 and the outer edge 115 may be a curved surface rounded at a predetermined curvature radius.

The pair of terraces 200 may be disposed around the pair of recess parts 100. The pair of terraces 200 may be formed to be inclined downward in a direction toward each other. In more detail, each of the terraces 200 may be formed in parallel to the bottom surface 101 of each of the recess parts 100.

An angle θ formed by the pair of terraces 200 may be an obtuse angle. In more detail, the angle θ formed by the pair of terraces 200 may be 130 degrees to 170 degrees. Thus, there is an advantage that a bat-ear does not occur after the case 10 is sealed while minimizing the void space that is not occupied by the electrode assembly 20 after the case 10 is sealed.

If the angle θ is less than 130 degrees, the void space may increase, and if the angle θ is greater than 170 degrees, there is a risk that the bat-ear occurs, or excessive wrinkles are generated around a bending part 300.

Also, the angle α between the terrace 200 and the circumferential surface 102 of the recess part 100 may be an obtuse angle.

Each of the terraces 200 may have an approximately ' 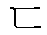 ' shape. In more detail, each terrace 200 may include a side 210, which is disposed at a side opposite to the bridge 150 with respect to the recess part 100 and extends parallel to the bridge 150, and a pair of extension parts 220 extending from both ends of the side 210 in the inclined direction of the terrace 200.

The pair of terraces 200 may be connected to each other by the bending part 300. In more detail, the bending part 300 may connect lower ends of the extension part 220 to each other.

The bending part 300 may be formed to be rounded so as to be convex downward. Thus, the bending part 300 may be connected so that the lower ends of the terrace 200 are continuously connected without being bent.

Thus, the pair of terraces 200 may have an approximately 'V' shape together with the bending part 300.

The bridge 150 may be disposed between the pair of recess parts 100 and connect the pair of recess parts 100 to each other. The bridge 150 may allow the recessed spaces S1 of the pair of recess parts 100 to communicate with each other.

In more detail, the bridge 150 may include a pair of connection surfaces 151 formed to be inclined in a direction closer to each other upward from the bottom surface 101 of the pair of recess parts 100, a first connection edge 152 connecting the pair of connection surfaces 151 to each other, and a pair of second connection edges 153 connecting the connection surface 151 to the bottom surface 101 of the recess part 100.

The lower end of each of the connection surfaces 151 may be connected to the bottom surface 101 of the recess part 100 by the second connection edge 153. Upper ends of the pair of connection surfaces 151 may be connected to each other by the first connection edge 152.

In addition, each of the connection surfaces 151 may cover the recessed space S1 of the recess part 100 at one side. In more detail, the recessed space S1 may be defined by the bottom surface 101 and the circumferential surface 102 of the recess part 100, and the connection surface 151 of the bridge 150.

The first connection edge 152 may be formed to be rounded so as to be convex upward. Thus, the first connection edge 152 may be connected so that the upper ends of the pair of connection surfaces 151 are continuously connected without being bent.

Each of the second connection edges 153 may be formed to be rounded so as to be convex downward. Thus, each of the second connection edges 153 may be connected so that the bottom surface 101 of the recess part 100 and the lower end of the connection surface 151 are continuously connected without being bent.

Thus, the bottom surface 101 of each of the pair of recess parts 100 may have an approximately 'W' shape together with the bridge 150.

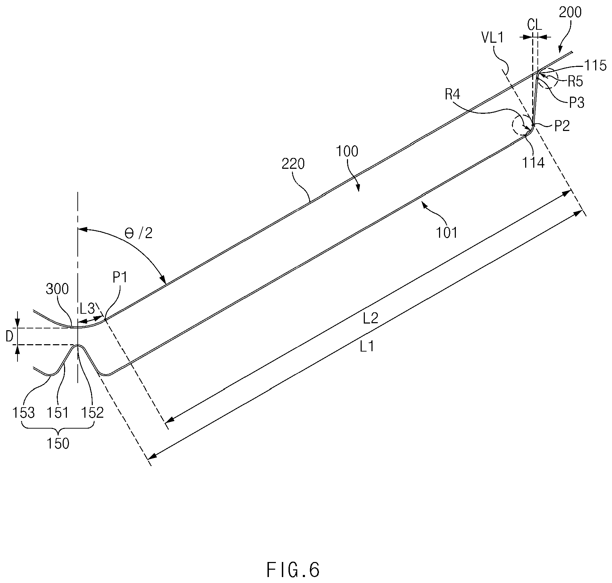

FIG. 5 is an enlarged view illustrating the bridge and a periphery of the bridge, which are illustrated in FIG. 4, and FIG. 6 is a view for explaining a detailed configuration of the pouch-type battery case illustrated in FIG. 4.

The bending part 300, the first connection edge 152, the second connection edge 153, the inner edge 114, and the outer edge 115 may be formed as curved surfaces having predetermined curvature radii R1 to R5, and it is preferable that each of the curvature radii R1 to R5 is constantly maintained.

However, the present invention is not limited thereto, and each of the curvature radii R1 to R5 may vary depending on the position thereof. In this case, the curvature radii R1 to R5 may mean average curvature radii of the bending part 300, the first connection edge 152, the second connection edge 153, the inner edge 114, and the outer edge 115, respectively.

The inner edge 114 and the outer edge 115 may form a predetermined clearance CL in a horizontal direction. In more detail, the clearance CL may mean a horizontal distance between a boundary P2 between the inner circumference 102a (see FIG. 8A) of the recess part 100 and the inner edge 114 and a boundary P3 between the outer circumference 102b of the recess part 100 and the outer edge 115.

The clearance CL may be less than or equal to the curvature radius R5 of the outer edge 115.

The clearance CL may be 0.5 mm or less, preferably 0.35 mm or less. In addition, the clearance CL may be equal to or greater than a thickness of the pouch sheet P, which is a base material of the case 10. That is, the clearance CL may be equal to or greater than a thickness of the terrace 200. For example, the clearance CL may be 0.15 mm or more.

Thus, while minimizing the void space that is not occupied by the electrode assembly 20 after the case 10 is sealed, it is possible to reduce a risk of cracks occurring during the forming process for forming the case 10.

If the clearance CL is greater than 0.5 mm, the void space may increase excessively. Conversely, if the clearance CL is less than the thickness of the terrace 200, the cracks may occur during the forming process for forming the case 10.

Also, the curvature radius R4 of the inner edge 114 may be greater than or equal to the curvature radius R5 of the outer edge 115.

As each of the curvature radii R4 and R5 of the inner edge 114 and the outer edge 115 increases, the void space that is not occupied by the electrode assembly 20 after the case 10 is sealed may be reduced. However, if each of the curvature radii R4 and R5 is excessively large, there is a limit to manufacturing the case 10 in a sharp shape, and an outer appearance of the secondary battery 3 is not beautiful to deteriorate marketability. Thus, it is preferable to appropriately design the curvature radii R4 and R5 of the inner edge 114 and the outer edge 115.

A virtual line VL that passes through the boundary P3 between the inner circumference 102a of the recess part 100 and the inner edge 114 and is perpendicular to the terrace 200 may be defined. In this case, a distance from the virtual line VL to the connection surface 151 of the bridge 150 may be the first distance L1, and a distance from the virtual line VL to the bending part 300 of the terrace 200 may be a second distance L2 with respect to the direction parallel to the terrace 200.

The second distance L2 may be less than the first distance L1. In more detail, a length L3 from a center of the bending part 300, i.e., from the lowermost end to the boundary P1 between the terrace 200 and the bending part 300 may be less than each of the first distance L1 and the second distance L2. That is, a difference between the first distance L1 and the second distance L2 may be greater than half a length of the bending part 300.

Thus, when the case 10 is sealed after folding the lowermost end of the bending part 300, the bat-ear may not occur in the case 10.

In addition, a height of the lowermost end of the bending part 300 may be greater than or equal to a height of the uppermost end of the first connection edge 152 of the bridge 150.

That is, the bending part 300 and the first connection edge 152 may have a predetermined height difference D in the vertical direction, or the lowermost end of the bending part 300 and the uppermost end of the first connection edge 152 may be disposed on the same horizontal plane so that a height difference therebetween becomes zero. The height difference D may be referred to as a forming depth.

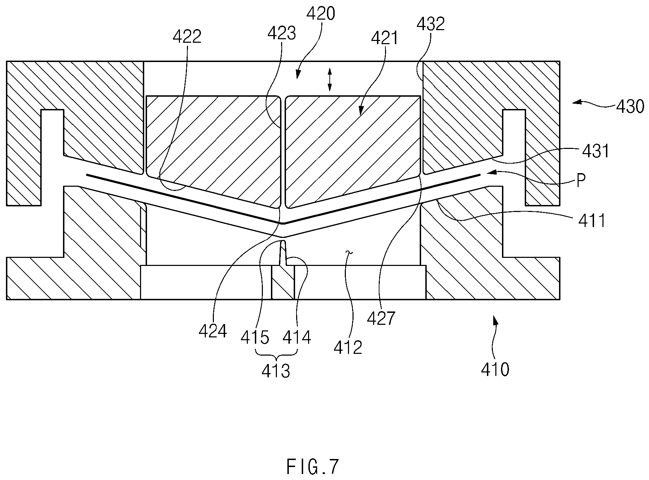

FIG. 7 is a cross-sectional view illustrating an apparatus for manufacturing the pouch-type battery case according to an embodiment of the present invention.

An apparatus for manufacturing the pouch-type battery case (hereinafter, referred to as a 'manufacturing apparatus') according to the present invention may include a die 410, on which the pouch sheet P is seated, and a punch 420 punching the pouch sheet P from an upper side of the die 410. The manufacturing apparatus may further include a stripper 430 that fixes the pouch sheet P at an upper side of the die 410.

The pouch sheet P may be a base material of the case 10. The pouch sheet P may be seated on the die 410 in an unfolded state or a partially folded state.

The stripper 430 may be disposed around the punch 420. That is, at least a portion of the punch 420 may be accommodated in the stripper 430, and an opening 432 penetrated vertically may be formed in the stripper 430.

The stripper 430 may be configured to be elevatable independently of the punch 420.

In addition, at least one of the die 410 or the punch 420 may be configured to be elevatable so that a distance therebetween varies.

For example, the die 410 may ascend in a state in which the pouch sheet P is seated, and the pouch sheet P may be fixed between the die 410 and the stripper 430. In this state, as the die 410 further ascends together with the stripper 430, the pouch sheet P may be punched by the punch 420 to form the case 10 described above.

For another example, the stripper 430 may descend before the punch 420 to fix the pouch sheet P in the state of being seated on the die 410. In this state, the punch 420 may descend to punch the pouch sheet P, and thus, the case 10 described above may be formed.

Hereinafter, each of constituents of the manufacturing apparatus will be described in more detail.

The die 410 may include a pair of seating surfaces 411 inclined upward in a direction away from each other, a pair of forming parts 412 recessed or penetrated downward from the pair of seating surfaces 411, and a center part 413 disposed between the pair of forming parts 412.

The pair of seating surfaces 411 may constitute at least a portion of a top surface of the die 410. Each of the seating surfaces 411 may be disposed around each of the forming part 412. The pair of seating surfaces 411 may be formed to be inclined downward in a direction closer to each other.

An angle formed by the pair of seating surfaces 411 may be an obtuse angle and may correspond to the angle θ formed by the pair of terraces 200 of the case 10. That is, the angle formed by the pair of seating surfaces 411 may be 130 degrees to 170 degrees and may be the same as or similar to the angle θ formed by the pair of terraces 200.

Lower ends of the pair of seating surfaces 411 may be connected to each other in a downwardly convexly rounded curved surface shape, and the curved surface may have a shape and a curvature radius corresponding to the bending part 300 of the case 10. In more detail, the curvature radius of the curved surface is the same as the curvature radius R1 of the bending part 300 or the same as the sum of the curvature radius R1 of the bending part 300 and the thickness of the pouch sheet P.

A pressing surface 431 constituting at least a portion of the bottom surface of the stripper 430 may be formed in parallel to the seating surface 411 of the die 410. Thus, an edge portion of the pouch sheet P may be compressed between the pressing surface 431 of the stripper 430 and the seating surface 411 of the die 410 so as to be formed into the terrace 200 of the case 10.

Each of the forming parts 412 of the die 410 may have a cup shape recessed downward from the seating surface 411 or a shape of an opening penetrated downward. In addition, a punching part 421 to be described later of the punch 420 may be inserted into the forming part 412 to punch the recess part 100 of the case 10.

If the forming part 412 has the shape of the opening, air may be discharged through the opening during the punching operation of the punch 420 to improve moldability of the case 10.

An upper end of the inner circumference of the forming part 412 and the seating surface 411 may be connected to each other by a die edge 418.

The die edge 418 may have a shape and a curvature radius corresponding to the outer edge 115 of the case 10. In more detail, the curvature radius of the die edge 418 may be the same as or similar to the curvature radius R5 of the outer edge 115. Thus, the outer edge 115 may be formed by the die edge 418.

The center part 413 may be disposed between the pair of forming parts 412. The center part 413 may have a shape corresponding to the bridge 150 of the case 10.

In more detail, the center part 413 may include a pair of inclined surfaces 414 formed to be inclined upward in a direction closer to each other, and a center edge 415 connecting the pair of inclined surfaces 414 to each other.

Each of the inclined surfaces 414 may cover the inner space of the forming part 412 at one side. In more detail, the inner space of the forming part 412 may be defined by the inner circumference of the forming part 412 and the inclined surface 414 of the center part 413.

The upper ends of the pair of inclined surfaces 414 may be connected to each other by the center edge 415. The center edge 415 may be rounded to be convex upward. Thus, the center edge 415 may be connected so that the upper ends of the pair of inclined surfaces 414 are continuously connected without being bent.

The center edge 415 may have a shape and a curvature radius corresponding to the first connection edge 152 of the case 10. In more detail, the curvature radius of the center edge 415 may be the same as or similar to the curvature radius R2 of the first connection edge 152.

A height of the uppermost end of the center edge 415 may be less than or equal to that of the lowermost end of the curved surface connecting the pair of seating surfaces 411 to each other.

The punch 420 may include a pair of punching parts 421 inserted into the pair of forming parts 412 of the die 410.

The pair of punching parts 421 may be separated from each other so as to be spaced apart from each other. In this case, opposing surfaces 423 of the pair of punching parts 421 may face each other.

However, the present invention is not limited thereto, and a configuration in which the pair of punching parts 421 are connected to each other in a range in which the pair of punching parts do not interfere with the center part 413 of the die 410 may be provided.

Each of the punching parts 421 may have a shape corresponding to the recess part 100 of the case 10. That is, bottom surfaces 422 of the pair of punching parts 421 may be formed to be inclined in a direction in which a height thereof decreases as the bottom surfaces 422 approach each other.

The bottom surfaces 422 of the pair of punching parts 421 may be inclined in a direction parallel to the seating surface 411 of the die 410. That is, an angle formed by the bottom surfaces 422 of the pair of punching parts 421 may correspond to the angle θ formed by the pair of seating surfaces 200 of the case 10.

That is, the angle formed by the bottom surfaces 422 of the pair of punching parts 421 may be an obtuse angle, more specifically, 130 degrees to 170 degrees.

A portion of the pouch sheet P may be pressed by the punching part 421 of the punch 420, which is inserted into the forming part 412 of the die 410, and may be formed into the recess part 100 of the case 10.

The bottom surface 422 and a lower end of an outer circumference of the punching part 421 may be connected to each other by a punching edge 427. The outer circumference of the punching part 421 may face the inner circumference of the stripper 430.

The punching edge 427 may have a shape and a curvature radius corresponding to the inner edge 114 of the case 10. In more detail, the curvature radius of the punching edge 427 may be the same as or similar to the curvature radius R4 of the inner edge 114. Thus, the inner edge 114 may be formed by the punching edge 427.

Since the curvature radius R4 of the inner edge 114 of the case 10 is equal to or greater than the curvature radius R5 of the outer edge 115, the curvature radius of the punching edge 427 may be equal to or greater than the curvature radius of the die edge 418.

In addition, similarly to the horizontal clearance CL between the inner edge 114 and the outer edge 115 of the case 10, a horizontal clearance between the punching edge 427 and the die edge 418 is 0.5 mm or less, preferably may be 0.35 mm or less.

In addition, since the horizontal clearance CL between the inner edge 114 and the outer edge 115 is less than or equal to the curvature radius R5 of the outer edge 115, the horizontal clearance between the punching edge 427 and the die edge 418 may be less than or equal to the curvature radius of the die edge 418.

In addition, the bottom surface 422 of the punching part 421 and the lower end of the opposite surface 423 may be connected to each other by a side edge 424. That is, the side edge 424 may be formed at a lower end of each of the bottom surfaces 422.

The side edge 424 may have a downwardly convex rounded shape. The side edge 424 may have a shape and a curvature radius corresponding to the second connection edge 153 of the case 10. In more detail, the curvature radius of the side edge 424 may be the same as or similar to the curvature radius R3 of the second connection edge 153.

Thus, a portion of the pouch sheet P may be formed into the bridge 150 of the case 10 by the center part 413 of the die 410 and the side edge 424 of the punch 420.

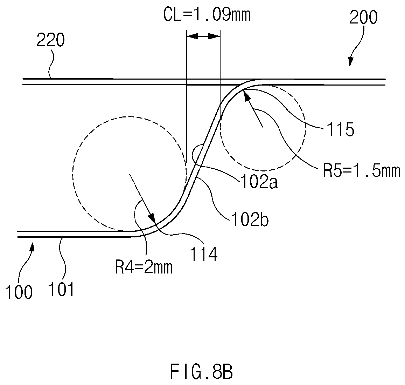

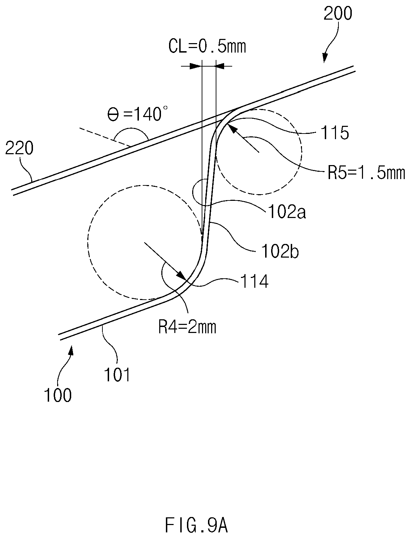

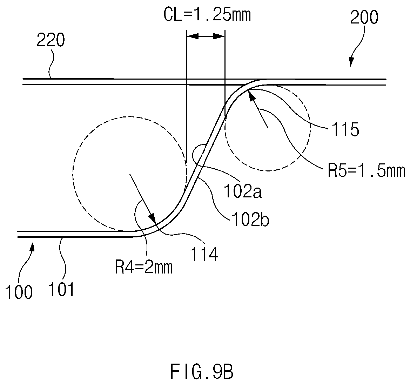

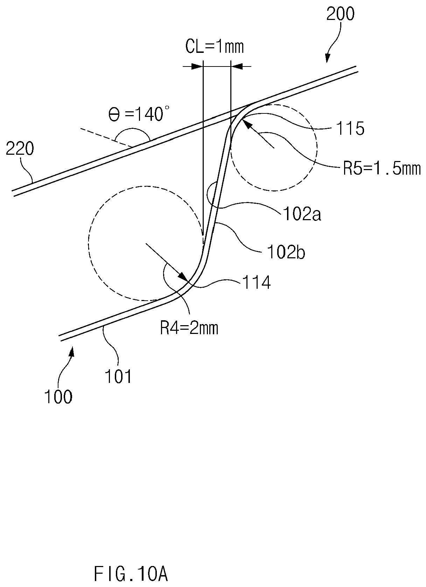

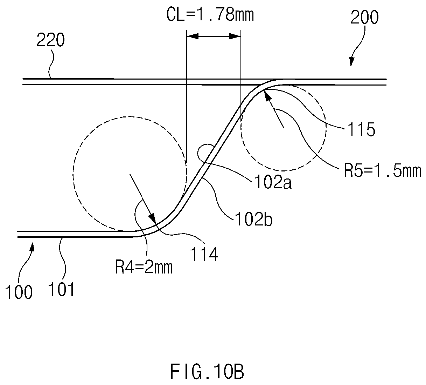

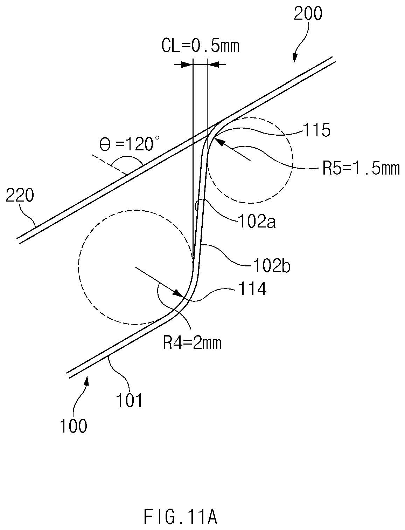

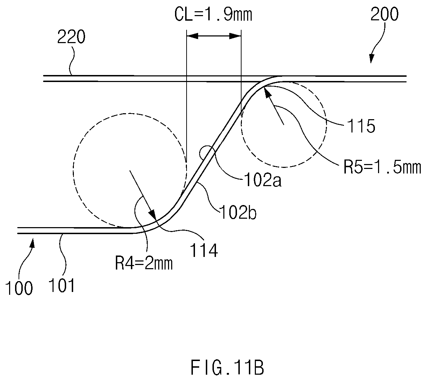

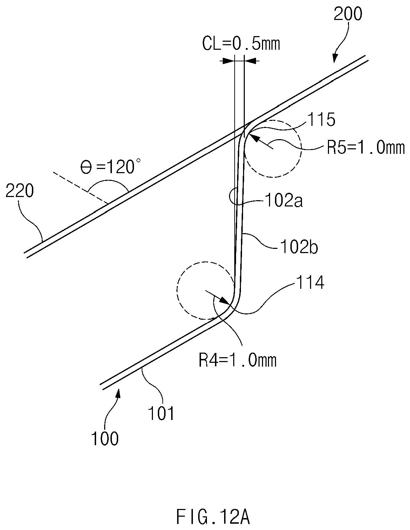

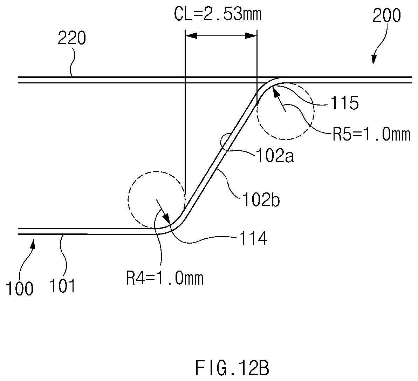

FIGS. 8a and 8b are first experimental examples according to an embodiment of the present invention, FIGS. 9a and 9b are second experimental examples according to an embodiment of the present invention, FIGS. 10a and 10b are first comparative examples, FIGS. 11a and 11b are second comparative examples, and FIGS. 12a and 12b are third comparative examples.

In more detail, FIGS. 8a and 9a illustrate first and second experimental examples, in which the angle θ between the pair of terraces 200 of the case 10 is 140 degrees, and the clearance CL between the inner edge 114 and the outer edge 115 in the horizontal direction is formed to 0.35 mm and 0.5 mm, respectively. In the first and second experimental examples, an angle θ between the pair of terraces 200 of the case 10 is 140 degrees, the curvature radius R4 of the inner edge 114 is 2.0 mm, and the curvature radius R5 of the outer edge 115 is 1.5 mm.

FIG. 10a illustrates the first comparative example in which the clearance CL between the inner edge 114 and the outer edge 115 in the horizontal direction is formed to 1 mm. That is, in the first comparative example, only the clearance CL increased when compared to the first and second experimental examples.

In the case of the first and second experimental examples, as illustrated in FIGS. 8b and 9b, when one terrace 200 rotates to be horizontal, the clearances CL between the inner edge 114 and the outer edge 115 toward the one terrace 200 in the horizontal direction are measured to 1.09 mm and 1.25 mm, respectively. That is, when the case 10 according to the first and second experimental examples is folded and sealed to form the secondary battery, it is means that the clearances CL between the inner edge 114 and the outer edge 115 in the horizontal direction are measured to 1.09 mm and 1.25mm, respectively.

On the other hand, in the case of the first comparative example, as illustrated in FIG. 10b, when one terrace 200 rotates to be horizontal, the clearance CL between the inner edge 114 and the outer edge 115 toward the one terrace 200 in the horizontal direction are measured to 1.78 mm. That is, when the case 10 according to the first comparative example is folded and sealed to form the secondary battery, it is means that the clearance CL between the inner edge 114 and the outer edge 115 in the horizontal direction are measured to 1.78 mm.

That is, as the clearance CL between the inner edge 114 and the outer edge 115 decreases, it is seen that the void space that is not occupied by the electrode assembly 20 is reduced.

FIGS. 11a illustrates second comparative example, in which the angle θ between the pair of terraces 200 of the case 10 is 120 degrees, and the clearance CL between the inner edge 114 and the outer edge 115 in the horizontal direction is formed to 0.5 mm. That is, the second comparative example, only the angle θ decreased when compared with the second experimental example.

In the case of the second comparative example, as illustrated in FIG. 11b, when one terrace 200 rotates to be horizontal, the clearance CL between the inner edge 114 and the outer edge 115 toward the one terrace 200 in the horizontal direction are measured to 1.9 mm. That is, when the case 10 according to the second comparative example is folded and sealed to form the secondary battery, it is means that the clearance CL between the inner edge 114 and the outer edge 115 in the horizontal direction are measured to 1.9 mm.

That is, as the angle θ between the pair of terraces 200 increases, it is seen that the void space that is not occupied by the electrode assembly 20 decreases.

However, as described above, if the angle θ is too large, since there is a risk that a bat-ear occurs, or excessive wrinkles occur around the bending part 300, it is preferable that the angle θ is 130 degrees to 170 degrees.

In the second comparative example illustrated in FIG. 11a, FIG. 12a illustrates a third comparative example, in which each of the curvature radius R4 of the inner edge 114 and the curvature radius R5 of the outer edge 115 is reduced to 1.0 mm.

In the case of the third comparative example, as illustrated in FIG. 12b, when one terrace 200 rotates to be horizontal, the clearance CL between the inner edge 114 and the outer edge 115 toward the one terrace 200 in the horizontal direction are measured to 2.53 mm. That is, when the case 10 according to the third comparative example is folded and sealed to form the secondary battery, it is means that the clearance CL between the inner edge 114 and the outer edge 115 in the horizontal direction are measured to 2.53 mm.

That is, as each of the curvature radii R4 and R5 of the inner edge 114 and the outer edge 115 increase, it is seen that the void space that is not occupied by the electrode assembly 20 is reduced. However, as described above, if each of the curvature radii R4 and R5 is excessively large, there is a limit to manufacturing the case 10 in a sharp shape, and an outer appearance of the secondary battery 3 is not beautiful to deteriorate marketability. Thus, it is preferable to appropriately design the curvature radii R4 and R5 of the inner edge 114 and the outer edge 115.

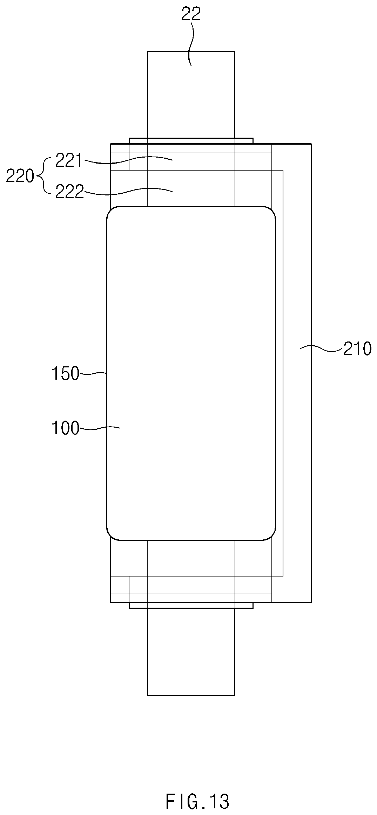

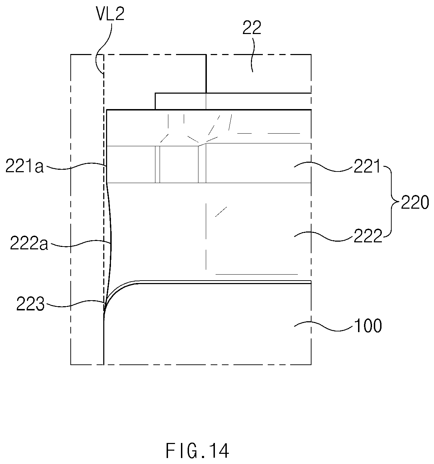

FIG. 13 is a plan view illustrating the pouch-type secondary battery according to an embodiment of the present invention, FIG. 14 is an enlarged plan view illustrating an edge of a circumferential part and a periphery of the circumferential part, which are illustrated in FIG. 13.

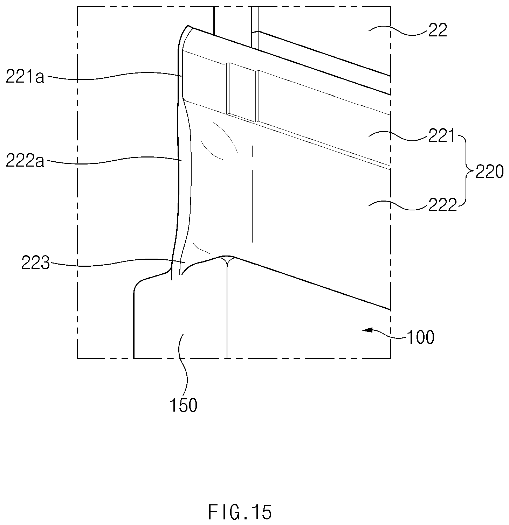

FIG. 15 is a perspective view illustrating the edge of the circumferential part and the periphery of the circumferential part, which are illustrated in FIG. 13.

In a state in which the electrode assembly 20 (see FIG. 2) is disposed between the pair of recess parts 100 of the case 10, the bending part 300 may be folded, and the pair of terraces 200 may be sealed to each other to form the secondary battery according to the embodiment of the present invention.

The secondary battery may include an accommodation part accommodating the electrode assembly 20 (see FIG. 2), a folding part forming a portion of a circumferential surface of the accommodation part, and a circumferential part expanded from the other portion of the circumferential surface of the accommodation part.

In more detail, the accommodation part is formed by the pair of recess parts 100 communicating with each other, and hereinafter, for convenience, the accommodation part is denoted by reference numeral '100', which is the same reference numeral as that of the recess part 100. In addition, the folding part is formed by folding the bridge 150, and hereinafter, for convenience, the folding part is denoted by reference numeral '150', which is the same reference numeral as that of the bridge 150. In addition, the circumferential part is formed by attaching the pair of terraces 200 to each other, and hereinafter, for convenience, the circumferential part is denoted by reference numeral '200', which is the same reference numeral as that of the terrace.

Therefore, for the secondary battery according to the embodiment of the present invention, the inner edge 114 (see FIG. 6) described above may be connected to an inner circumference of an inner top surface or an inner bottom surface of the accommodation part 100. In addition, the outer edge 115 (see FIG. 6) may connect the outer circumference of the accommodation part 100 and the circumferential part 200.

As described above, the curvature radius R4 of the inner edge 114 may be equal to or greater than the curvature radius R5 of the outer edge 115, and the clearance CL between the inner edge 114 and the outer edge 115 in the horizontal direction may be less than the curvature radius R4 of the inner edge 114.

This may be confirmed by disassembling the secondary battery itself, but is not limited thereto, and may be confirmed by methods such as computerized tomography (CT), magnetic resonance imaging (MRI), X-ray, and the like. In this method, characteristics of the case 10 described above may be confirmed without disassembling the secondary battery.

The circumferential part 200 may include a long side portion formed by attaching the sides 210 of the pair of terraces 200 to each other and a short side portion formed by attaching the extension parts 220 of the pair of terraces 200 to each other. Hereinafter, the long side portion is denoted by reference numeral '210', which is the same reference numeral as that of the side 210, and the short side portion is denoted by reference numeral '220', which is the same as that of the extension part 220.

The long side portion 210 may extend in a longitudinal direction of the accommodation part 100, and the short side portion 220 may extend in a width direction of the accommodation part 100.

The circumferential part 200 may be sealed by thermal fusion. That is, the circumferential part 200 may be provided with a sealing part extending along the circumferential part.

In more detail, each of the short side portions 220 may include a sealing part 221 and a non-sealing part 222.

The sealing part 221 may be formed to be elongated in a longitudinal direction of the short side portion 220. A portion of the sealing part 221 may be formed by fusing a pair of extension parts 220 to each other, and the other portion of the sealing part 221 may be formed by fusing each of the extension part 220 to an insulating part 23 (see FIG. 2) surrounding an electrode lead 22.

The non-sealing part 222 may be formed to be elongated in the longitudinal direction of the short side portion 220 and may be disposed inside the sealing part 221. This is because, when the sealing part 221 is too close to the accommodation part 100, the electrode tab 21 (see FIG. 2) of the electrode assembly 20 is damaged by a thermal fusion process.

That is, the non-sealing part 222 may be disposed between the sealing part 221 and the accommodation part 100. The electrode tab 21 (see FIG. 2) of the electrode assembly 20 may be disposed on the non-sealing part 222.

Thus, a folding part 150-side edge of the short side portion 220 may include an edge 221a of the sealing part 221 and an edge 222a of the non-sealing part 222. The folding part 150-side edge may mean an edge formed by folding the bending part 300 of the case 10.

Hereinafter, for convenience of description, the edge of the non-sealing part 222 is called a first edge 222a, and the edge of the sealing part 221 is called a second edge 221a.

The first edge 222a may be adjacent to the folding part 150. The first edge 222a may not be a straight line, but may be slightly curved or wrinkled, but is not limited thereto.

The second edge 221a may extend in a direction opposite to the folding part 150 from the first edge 222a. That is, the first edge 222a may be disposed between the second edge 221a and the folding part 150.

The second edge 221a may have a straight-line shape and may have a thickness less than that of the first edge 222a. Also, the second edge 221a may protrude more than the first edge 222a in the width direction of the accommodation part 100. This is because the first edge 222a is the edge of the non-sealing part 222, whereas the second edge 221a is the edge of the sealing part 221.

The first edge 222a and the second edge 221a may not protrude more than the folding part 150 in the width direction of the accommodation part 100. That is, the first edge 222a and the second edge 221a may not protrude with respect to a virtual line VL2 that is in contact with the folding part 150 and linearly extends in the longitudinal direction of the folding part 150. Also, the second edge 221a may be closer to the virtual line VL2 than the first edge 222a.

That is, in the secondary battery according to the related art, a portion corresponding to the second edge 221a protrudes from the folding part 150 to form the bat-ear. However, in the secondary battery according to the present invention, the bat-ear does not exist by the configuration of the case described above.

In addition, the folding part 150-side edge of the short side portion 220 may further include a boundary part 223 connecting the first edge 222a to the folding part 150.

The boundary part 223 may be disposed between the first edge 222a and the folding part 150 and may protrude more than the first edge 222a in the width direction of the accommodation part 100.

It is preferable that the boundary part 223 protrudes less than the folding part 150 in the width direction of the accommodation part 100. In more detail, a degree of protrusion of the boundary part 223 may vary depending on a height difference D (see FIG. 6) between the bending part 300 and the first connection edge 152 described above, and it is desirable to be designed with an appropriate height difference.

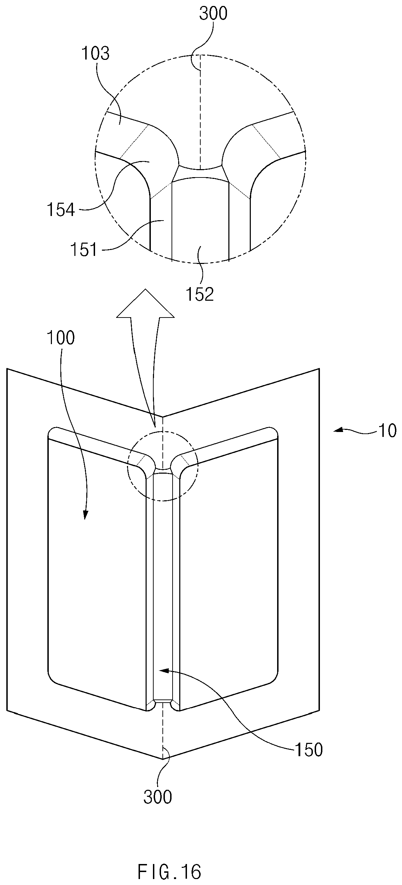

FIG. 16 is a view illustrating a state in which a pouch-type battery case is unfolded according to another embodiment of the present invention.

Hereinafter, contents duplicated with the previously described contents will be cited, and described with a focus on the differences.

A circumferential surface of each of recess parts 100 may include an extension surface disposed at an opposite side of a bridge 150 and extending in a longitudinal direction of each of the recess parts 100 and a pair of side surfaces 103 extending in a width direction of the recess part 100 on both ends of the extension surface and connected to a connection surface 151.

An area 154 on which the side surface 103 and the connection surface 151 of the bridge 150 are connected to each other may be formed as a curved surface having a predetermined curvature radius. Thus, it is possible to alleviate the occurrence of the creases around the bridge 150 when the case 10 is sealed.

The above-disclosed subject matter is to be considered illustrative, and not restrictive, and the appended claims are intended to cover all such modifications, enhancements, and other embodiments.

Thus, the embodiment of the present invention is to be considered illustrative, and not restrictive.

Therefore, the scope of the present disclosure is defined not by the detailed description of the invention but by the appended claims.

**[Description of the Symbols]**

| | |
|---|---|
| 10: Case | 20: Electrode assembly |
| 100: Recess part (of case), accommodation part (of secondary battery) | |
| 114: Inner edge | 115: Outer edge |
| 150: Bridge (of case), folding part (of secondary battery) | |
| 151: Connection surface | 152: First connection edge |
| 153: Second connection edge | |
| 200: Terrace (of case), circumferential part (of secondary battery) | |
| 210: Side (of case), Long side portion (of secondary battery) | |
| 220: Extension part (of case), Short side portion (of secondary battery) | |
| 221: Sealing part | 221a: Second edge |
| 222: Non-sealing part | 222a: First edge |
| 223: Boundary part | 300: Bending part |
| 410: Die | 411: Seating surface |
| 412: Forming part | 413: Center part |
| 420: Punch | 422: Punching part |
| 423: Connection part | 414, 424: Inclined surface |
| 415. 425: Center edge | |
| 416. 426: Side edge | |
| 417: Lower edge | 418: Die edge |
| 427: Punching edge | |

## Claims

1. A pouch-type battery case (10) configured to accommodate an electrode assembly (20), in which electrodes and separators are alternately stacked, the pouch-type battery case comprising:
a pair of recess parts (100), each of which has a recessed shape;
a pair of terraces (200) that are disposed around the pair of recess parts (100) and are inclined downward in a direction closer to each other in a state, in which the battery case is unfolded; and
a bridge (150) disposed between the pair of recess parts (100), configured to connect the pair of recess parts (100) to each other, having a pair of connection surfaces (151) formed to be inclined upward from a bottom surface of each of the pair of recess parts (100) in a direction closer to each other,
wherein, in the state in which the battery case is unfolded, an angle formed by the pair of terraces (200) is an obtuse angle.

2. The pouch-type battery case (10) of claim 1, wherein, in the state in which the battery case (10) is unfolded, the bottom surfaces of the pair of recess parts (100) are formed to be inclined upward in a direction away from each other.

3. The pouch-type battery case (10) of claim 1, wherein, in the state in which the battery case is unfolded, the angle formed by the pair of terraces (200) is 130 degrees to 170 degrees.

4. The pouch-type battery case (10) of claim 1, further comprising:
an inner edge (114) configured to connect an inner circumference of the recess part to the bottom surface of the recess part (100); and
an outer edge (115) configured to connect an outer circumference of each of the recess part (100) to the terrace (200),
wherein the inner edge (114) has a curvature radius equal to or greater than a curvature radius of the outer edge (114).

5. The pouch-type battery case (10) of claim 4, wherein, in the state in which the battery case (10) is unfolded, a clearance between the inner edge (114) and the outer edge (115) in a horizontal direction is equal to or less than the curvature radius of the outer edge (115).

6. The pouch-type battery case (10) of claim 4, further comprising, in the state in which the battery case (10) is unfolded, a bending part (300) configured to connect the pair of terraces (200) to each other and convexly rounded downward,
wherein the bridge (150) further comprises a first connection edge (152) configured to connect the pair of connection surfaces (151) to each other and convexly rounded upward, and
a height of the lowermost end of the bending part (300) is equal to or greater than a height of the uppermost end of the first connection edge (152).

7. The pouch-type battery case (10) of claim 6, wherein, in the state in which the battery case (10) is unfolded, the bridge (150) further comprises a pair of second connection edges (153) configured to the pair of connection surfaces connect to the bottom surfaces of the pair of recess parts (100) and convexly rounded downward.

8. The pouch-type battery case (10) of claim 6, wherein, in the state in which the battery case (10) is unfolded, with respect to a virtual line passing through a boundary between the inner circumference of the recess part (100) and the inner edge (114) and perpendicular to each of the terraces (200),
a distance from the virtual line to the connection surface in a direction parallel to the terrace (200) is a first distance, and
a distance from the virtual line to a boundary between the terrace (200) and the bending part (300) is a second distance less than the first distance.

9. The pouch-type battery case (10) of claim 8, wherein, in the state in which the battery case (10) is unfolded, a length from a center of the bending part (300) to the boundary between the terrace (200) and the bending part (100) is less than a difference between the first distance and the second distance.

10. An apparatus for manufacturing a pouch-type battery case formed by punching a pouch sheet (P) seated on a die (410) by using a punch (420),
wherein the die (410) comprises:
a pair of seating surfaces (411) inclined upward in a direction away from each other;
a pair of forming parts (412) recessed or penetrated downward from the pair of seating surfaces (411); and
a center part (413) disposed between the pair of forming parts (412), and
the punch (420) comprises a pair of punching parts (422) inserted into the pair of forming parts (412) and having bottom surfaces inclined in a direction, in which a height thereof decreases as the pair of punching parts (422) are closer to each other,
wherein an angle formed by the pair of seating surfaces (411) is an obtuse angle.

11. The apparatus for manufacturing a pouch-type battery case of claim 10, wherein the die (410) further comprises a die edge (418) configured to connect an inner circumference of each of the forming parts (412) to each of the seating surfaces (411),
the punch (420) further comprises a punching edge (427) configured to connect an outer circumference of the punching part (422) to a bottom surface of the punching part (422),
wherein the punching edge (427) has a curvature radius equal to or greater than a curvature radius of the die edge (418) .

12. The apparatus for manufacturing a pouch-type battery case of claim 11, wherein a clearance between the die edge (418) and the punching edge (427) in a horizontal direction is equal to or less than the curvature radius of the outer edge.

13. The apparatus for manufacturing a pouch-type battery case of claim 10, wherein the center part (413) comprises a pair of inclined surfaces formed to be inclined downward in a direction away from each other.

14. The apparatus for manufacturing a pouch-type battery case of claim 13, wherein the center part (413) further comprises a center edge (425) configured to connect the pair of inclined surfaces to each other and rounded upward.

15. The apparatus for manufacturing a pouch-type battery case of claim 10, wherein the punching part (422) further comprises a side edge (426) formed on a lower end of the bottom surface and convexly rounded downward.

## Patentansprüche

1. Beuteltyp-Batteriegehäuse (10), welches dazu eingerichtet ist, eine Elektrodenanordnung (20) aufzunehmen, in welcher Elektroden und Separatoren alternierend gestapelt sind, wobei das Beuteltyp-Batteriegehäuse umfasst:
ein Paar Ausschnittteile (100), von welchen jeder eine ausgeschnittene Form aufweist;
ein Paar Absätze (200), welche um das Paar Ausschnitteile (100) angeordnet sind und in einer Richtung näher zueinander in einem Zustand nach unten geneigt sind, in welchem das Batteriegehäuse entfaltet ist; und
eine Brücke (150), welche zwischen dem Paar Ausschnittteile (100) angeordnet ist, welche dazu eingerichtet ist, das Paar Ausschnittteile (100) miteinander zu verbinden, welche ein Paar Verbindungsflächen (151) aufweist, welche gebildet sind, um von einer unteren Fläche von jedem von dem Paar Ausschnittteile (100) in einer Richtung näher zueinander nach oben geneigt zu sein,
wobei, in dem Zustand, in welchem das Batteriegehäuse entfaltet ist, ein durch das Paar Absätze (200) gebildeter Winkel ein stumpfer Winkel ist.

2. Beuteltyp-Batteriegehäuse (10) nach Anspruch 1, wobei, in dem Zustand, in welchem das Batteriegehäuse (10) entfaltet ist, die unteren Flächen des Paars Ausschnittteile (100) gebildet sind, um in einer Richtung weg voneinander nach oben geneigt zu sein.

3. Beuteltyp-Batteriegehäuse (10) nach Anspruch 1, wobei, in dem Zustand, in welchem das Batteriegehäuse entfaltet ist, der durch das Paar Absätze (200) gebildete Winkel 130° bis 170° beträgt.

4. Beuteltyp-Batteriegehäuse (10) nach Anspruch 1, ferner umfassend:
einen Innenrand (114), welcher dazu eingerichtet ist, einen Innenumfang des Ausschnittteils mit der unteren Fläche des Ausschnittteils (100) zu verbinden; und
einen Außenrand (115), welcher dazu eingerichtet ist, einen Außenumfang von jedem Ausschnittteil (100) mit dem Absatz (200) zu verbinden,
wobei der Innenrand (114) einen Krümmungsradius gleich wie oder größer als einen Krümmungsradius des Außenrandes (114) aufweist.

5. Beuteltyp-Batteriegehäuse (10) nach Anspruch 4, wobei, in dem Zustand, in welchem das Batteriegehäuse (10) entfaltet ist, ein Freiraum zwischen dem Innenrand (114) und dem Außenrand (115) in einer horizontalen Richtung gleich wie oder weniger als der Krümmungsradius des Außenrandes (115) beträgt.

6. Beuteltyp-Batteriegehäuse (10) nach Anspruch 4, ferner umfassend, in dem Zustand, in welchem das Batteriegehäuse (10) entfaltet ist, einen Biegeteil (300), welcher dazu eingerichtet ist, das Paar Absätze (200) miteinander zu verbinden, und konvex nach unten abgerundet ist,
wobei die Brücke (150) ferner einen ersten Verbindungsrand (152) umfasst,
welcher dazu eingerichtet ist, das Paar Verbindungsflächen (151) miteinander zu verbinden, und konvex nach oben abgerundet ist, und
eine Höhe des untersten Endes des Biegeteils (300) gleich wie oder größer als eine Höhe des obersten Endes des ersten Verbindungsrandes (152) ist.

7. Beuteltyp-Batteriegehäuse (10) nach Anspruch 6, wobei, in dem Zustand, in welchem das Batteriegehäuse (10) entfaltet ist, die Brücke (150) ferner ein Paar zweiter Verbindungsränder (153) umfasst, welche dazu eingerichtet sind, das Paar Verbindungsflächen mit den unteren Flächen des Paars Ausschnittteile (100) zu verbinden, und konvex nach unten abgerundet ist.

8. Beuteltyp-Batteriegehäuse (10) nach Anspruch 6, wobei, in dem Zustand, in welchem das Batteriegehäuse (10) entfaltet ist, in Bezug auf eine virtuelle Linie, welche durch eine Grenze zwischen dem Innenumfang des Ausschnittteils (100) und dem Innenrand (114) und senkrecht zu jedem der Absätze (200) passiert, eine Entfernung von der virtuellen Linie zu der Verbindungsfläche in einer Richtung parallel zu dem Absatz (200) eine erste Entfernung ist, und
eine Entfernung von der virtuellen Linie zu einer Grenze zwischen dem Absatz (200) und dem Biegeteil (300) eine zweite Entfernung ist, welche kürzer als die erste Entfernung ist.

9. Beuteltyp-Batteriegehäuse (10) nach Anspruch 8, wobei, in dem Zustand, in welchem das Batteriegehäuse (10) entfaltet ist, eine Länge von einem Zentrum des Biegeteils (300) zu der Grenze zwischen dem Absatz (200) und dem Biegeteil (100) geringer ist als ein Unterschied zwischen der ersten Entfernung und der zweiten Entfernung.

10. Vorrichtung zum Herstellen eines Beuteltyp-Batteriegehäuses, welches durch Stanzen eines Beutelbogens (P) gebildet ist, welcher auf einer Matrize (410) gelagert ist, durch Verwenden einer Stanze (420),
wobei die Matrize (410) umfasst:
ein Paar Lagerungsflächen (411), welche in einer Richtung weg voneinander nach oben geneigt sind;
ein Paar Bildungsteile (412), welche von dem Paar Lagerungsflächen (411) nach unten ausgeschnitten oder eingedrungen sind; und
einen Zentralteil (413), welcher zwischen dem Paar Bildungsteile (412) angeordnet ist, und
wobei die Stanze (420) ein Paar Stanzteile (422) umfasst, welche in das Paar Bildungsteile (412) eingesetzt sind und untere Flächen aufweisen, welche in eine Richtung geneigt sind, in welche eine Höhe davon abnimmt während das Paar Stanzteile (422) zueinander näher sind,
wobei ein Winkel, welcher durch das Paar Lagerungsflächen (411) gebildet ist, ein stumpfer Winkel ist.

11. Vorrichtung zum Herstellen eines Beuteltyp-Batteriegehäuses nach Anspruch 10, wobei die Matrize (410) ferner einen Matrizenrand (418) umfasst, welcher dazu eingerichtet ist, einen Innenumfang von jedem der Bildungsteile (412) mit jeder der Lagerungsflächen (411) zu verbinden,
wobei die Stanze (420) ferner einen Stanzrand (427) umfasst, welcher dazu eingerichtet ist, einen Außenumfang des Stanzteils (422) mit einer unteren Fläche des Stanzteils (422) zu verbinden,
wobei der Stanzrand (427) einen Krümmungsradius gleich wie oder größer als einen Krümmungsradius des Matrizenrandes (418) aufweist.

12. Vorrichtung zum Herstellen eines Beuteltyp-Batteriegehäuses nach Anspruch 11, wobei ein Freiraum zwischen dem Matrizenrand (418) und dem Stanzrand (427) in einer horizontalen Richtung gleich wie oder weniger als der Krümmungsradius des Außenrandes ist.

13. Vorrichtung zum Herstellen eines Beuteltyp-Batteriegehäuses nach Anspruch 10, wobei der Zentralteil (413) ein Paar geneigter Flächen umfasst, welche gebildet sind, um in eine Richtung weg voneinander nach unten geneigt zu sein.

14. Vorrichtung zum Herstellen eines Beuteltyp-Batteriegehäuses nach Anspruch 13, wobei der Zentralteil (413) ferner einen Zentralrand (425) umfasst, welcher dazu eingerichtet ist, das Paar geneigter Flächen miteinander zu verbinden, und nach oben abgerundet ist.

15. Vorrichtung zum Herstellen eines Beuteltyp-Batteriegehäuses nach Anspruch 10, wobei der Stanzteil (422) ferner einen Seitenrand (426) umfasst, welcher an einem unteren Ende der unteren Fläche gebildet ist und konvex nach unten abgerundet ist.

## Revendications

1. Boîtier de batterie (10) de type poche configuré pour accueillir un ensemble d'électrodes (20), dans lequel des électrodes et des séparateurs sont empilés alternativement, le boîtier de batterie de type poche comprenant :
une paire de parties en évidement (100) ayant chacune une forme évidée ;
une paire de terrasses (200) qui sont disposées autour de la paire de parties en évidement (100) et qui sont inclinées vers le bas dans une direction où elles se rapprochent l'une de l'autre dans un état dans lequel le boîtier de batterie est déplié ; et
un pont (150) disposé entre la paire de parties en évidement (100), configuré pour connecter la paire de parties en évidement (100) entre elles, ayant une paire de surfaces de connexion (151) formées pour être inclinées vers le haut à partir d'une surface de fond de chacune de la paire de parties en évidement (100) dans une direction où elles se rapprochent l'une de l'autre,
dans lequel, dans l'état dans lequel le boîtier de batterie est déplié, un angle formé par la paire de terrasses (200) est un angle obtus.

2. Boîtier de batterie (10) de type poche selon la revendication 1, dans lequel, dans l'état dans lequel le boîtier de batterie (10) est déplié, les surfaces de fond de la paire de parties en évidement (100) sont formées pour être inclinées vers le haut dans une direction où elles s'éloignent l'une de l'autre.

3. Boîtier de batterie (10) de type poche selon la revendication 1, dans lequel, dans l'état dans lequel le boîtier de batterie est déplié, l'angle formé par la paire de terrasses (200) est de 130 degrés à 170 degrés.

4. Boîtier de batterie (10) de type poche selon la revendication 1, comprenant en outre :
un bord intérieur (114) configuré pour connecter une circonférence intérieure de la partie en évidement à la surface de fond de la partie en évidement (100) ; et
un bord extérieur (115) configuré pour connecter une circonférence extérieure de chaque partie en évidement (100) à la terrasse (200),
dans lequel le bord intérieur (114) présente un rayon de courbure égal ou supérieur à un rayon de courbure du bord extérieur (114).

5. Boîtier de batterie (10) de type poche selon la revendication 4, dans lequel, dans l'état dans lequel le boîtier de batterie (10) est déplié, un espace entre le bord intérieur (114) et le bord extérieur (115) dans une direction horizontale est égal ou inférieur au rayon de courbure du bord extérieur (115).

6. Boîtier de batterie (10) de type poche selon la revendication 4, comprenant en outre, dans l'état dans lequel le boîtier de batterie (10) est déplié, une partie de cintrage (300) configurée pour connecter la paire de terrasses (200) entre elles et arrondie de manière convexe vers le bas,
dans lequel le pont (150) comprend en outre un premier bord de connexion (152) configuré pour connecter la paire de surfaces de connexion (151) entre elles et arrondi de manière convexe vers le haut, et
une hauteur de l'extrémité la plus basse de la partie de cintrage (300) est égale ou supérieure à une hauteur de l'extrémité la plus haute du premier bord de connexion (152).

7. Boîtier de batterie (10) de type poche selon la revendication 6, dans lequel, dans l'état dans lequel le boîtier de batterie (10) est déplié, le pont (150) comprend en outre une paire de seconds bords de connexion (153) configurés pour que la paire de surfaces de connexion se connectent aux surfaces de fond de la paire de parties en évidement (100) et arrondis de manière convexe vers le bas.

8. Boîtier de batterie (10) de type poche selon la revendication 6, dans lequel, dans l'état dans lequel le boîtier de batterie (10) est déplié, par rapport à une ligne virtuelle traversant une limite entre la circonférence intérieure de la partie en évidement (100) et le bord intérieur (114) et perpendiculaire à chacune des terrasses (200),
une distance allant de la ligne virtuelle à la surface de connexion dans une direction parallèle à la terrasse (200) est une première distance, et
une distance allant de la ligne virtuelle à une limite entre la terrasse (200) et la partie de cintrage (300) est une seconde distance inférieure à la première distance.

9. Boîtier de batterie (10) de type poche selon la revendication 8, dans lequel, dans l'état dans lequel le boîtier de batterie (10) est déplié, une longueur d'un centre de la partie de cintrage (300) à la limite entre la terrasse (200) et la partie cintrage (300) est inférieure à une différence entre la première distance et la seconde distance.

10. Appareil de fabrication d'un boîtier de batterie de type poche formé par poinçonnage d'une feuille de poche (P) assise sur une matrice (410) à l'aide d'un poinçon (420),
dans lequel la matrice (410) comprend :
une paire de surfaces d'assise (411) inclinées vers le haut dans une direction où elles s'éloignent l'une de l'autre ;
une paire de parties de formage (412) évidées ou s'enfonçant vers le bas à partir de la paire de surfaces d'assise (411) ; et
une partie centrale (413) disposée entre la paire de parties de formage (412), et
le poinçon (420) comprend une paire de parties de poinçonnage (422) insérées dans la paire de parties de formage (412) et ayant des surfaces de fond inclinées dans une direction dans laquelle une hauteur de celles-ci diminue à mesure que les parties de la paire de parties de poinçonnage (422) se rapprochent l'une de l'autre,
dans lequel un angle formé par la paire de surfaces d'assise (411) est un angle obtus.

11. Appareil de fabrication d'un boîtier de batterie de type poche selon la revendication 10, dans lequel la matrice (410) comprend en outre un bord de matrice (418) configuré pour connecter une circonférence intérieure de chacune des parties de formage (412) à chacune des surfaces d'assise (411),
le poinçon (420) comprend en outre un bord de poinçonnage (427) configuré pour connecter une circonférence extérieure de la partie de poinçonnage (422) à une surface de fond de la partie de poinçonnage (422),
dans lequel le bord de poinçonnage (427) présente un rayon de courbure égal ou supérieur à un rayon de courbure du bord de matrice (418).

12. Appareil de fabrication d'un boîtier de batterie de type poche selon la revendication 11, dans lequel un espace entre le bord de matrice (418) et le bord de poinçonnage (427) dans une direction horizontale est égal ou inférieur au rayon de courbure du bord extérieur.

13. Appareil de fabrication d'un boîtier de batterie de type poche selon la revendication 10, dans lequel la partie centrale (413) comprend une paire de surfaces inclinées formées pour s'incliner vers le bas dans une direction où elles s'éloignent l'une de l'autre.

14. Appareil de fabrication d'un boîtier de batterie de type poche selon la revendication 13, dans lequel la partie centrale (413) comprend en outre un bord central (425) configuré pour connecter la paire de surfaces inclinées entre elles et arrondi vers le haut.

15. Appareil de fabrication d'un boîtier de batterie de type poche selon la revendication 10, dans lequel la partie de poinçonnage (422) comprend en outre un bord latéral (426) formé sur une extrémité inférieure de la surface de fond et arrondi de manière convexe vers le bas.
